# EUROPEAN PATENT APPLICATION

(11) **EP 4 647 812 A1**
(43) Date of publication of application: **12.11.2025**
(21) Application number: 24762876.1
(22) Date of filing: 11.01.2024
(51) Int. Cl.: G01S 19/28, G01S 19/08, G01S 19/37, H04B 7/185

(54) **COMMUNICATION METHOD, ELECTRONIC DEVICE AND READABLE STORAGE MEDIUM**

(30) Priority: 28.02.2023 CN 202310230233
(71) Applicant: Huawei Technologies Co., Ltd., Shenzhen, Guangdong 518129 (CN)
(72) Inventor: WANG, Bao, Shenzhen, Guangdong 518129 (CN); QIAN, Feng, Shenzhen, Guangdong 518129 (CN); ZHONG, Jilei, Shenzhen, Guangdong 518129 (CN); YAO, Zhendong, Shenzhen, Guangdong 518129 (CN); GAN, Wenyu, Shenzhen, Guangdong 518129 (CN)
(74) Representative: MERH-IP Matias Erny Reichl Hoffmann Patentanwälte PartG mbB
(86) International application number: PCT/CN2024/071801
(87) International publication number: WO 2024/179193

(57) **Abstract**

This application provides a communication method, an electronic device, and a readable storage medium. When a terminal device performs a downlink service, and the terminal device is pointed at a first satellite, if the first satellite is in an orbital change process, the terminal device may search for the first satellite by using a second search strategy. The second search strategy is as follows: The terminal device searches in a preset time domain range based on a preset search frequency range. In this case, if the terminal device finds the first satellite, the terminal device tracks the first satellite, that is, keeps synchronous with the satellite. In this application, during the orbital change process of the satellite, the terminal device still searches for the first satellite in the preset time domain range based on the preset search frequency range. When the first satellite covers the terminal device, the terminal device may find the first satellite, to ensure tracking of the satellite.

## Description

This application claims priority to Chinese Patent Application No. 202310230233.X, filed with the China National Intellectual Property Administration on February 28, 2023 and entitled "COMMUNICATION METHOD, ELECTRONIC DEVICE, AND READABLE STORAGE MEDIUM", which is incorporated herein by reference in its entirety.

### TECHNICAL FIELD

This application relates to the field of satellite communication technologies, and in particular, to a communication method, an electronic device, and a readable storage medium.

### BACKGROUND

With development of communication networks, terminal devices may communicate with other terminal devices through satellite networks without coverage of terrestrial networks such as cellular networks, Wi-Fi networks, or Bluetooth networks. This means that the terminal devices can still communicate with the other terminal devices in areas that are not covered by the terrestrial networks, for example, oceans, deserts, grasslands, and uninhabited areas.

Currently, when a terminal device communicates with another terminal device through a satellite network, the terminal device may receive downlink information from a satellite. Before receiving the downlink information from the satellite, the terminal device needs to first search for the satellite. The terminal device can receive the downlink information from the satellite only after the searching is successful. However, during an orbital change process of the satellite, the terminal device cannot find a satellite with good communication quality, or even cannot find a satellite, thereby affecting satellite communication of the terminal device.

### SUMMARY

This application provides a communication method, an electronic device, and a readable storage medium. During an orbital change process of a satellite, the satellite may be searched for in a preset time domain range based on a preset search frequency range. When the satellite covers a terminal device, it can be ensured that the terminal device finds the satellite.

According to a first aspect, an embodiment of this application provides a communication method. The communication method may be performed by a terminal device or a chip in a terminal device. The following uses the terminal device as an example for description. In the method, if the terminal device does not track a first satellite, the terminal device cannot perform a downlink service. For example, the terminal device cannot receive downlink information from the first satellite. Therefore, a prerequisite for the terminal device to perform the downlink service is that the terminal device tracks the first satellite. It should be understood that the terminal device is within coverage of the first satellite.

In this embodiment of this application, in response to an operation of triggering the terminal device to perform the downlink service, when the terminal device is pointed at the first satellite, if the first satellite is in an orbital change process, the terminal device may search for the first satellite by using a second search strategy. The second search strategy is as follows: The terminal device searches in a preset time domain range based on a preset search frequency range. The preset search frequency range is related to a satellite communication capability of the terminal device. In some embodiments, the terminal device includes a communication chip used for satellite communication, for example, a satellite communication chip, and the preset search frequency range is related to a search capability of the satellite communication chip. The preset time domain range may be understood as a time domain error existing when the terminal device searches for a satellite once when the first satellite is in the orbital change process.

If the terminal device finds the first satellite by using the second search strategy, the terminal device may track the first satellite. That the terminal device tracks the first satellite may be understood as follows: The terminal device keeps synchronous with the first satellite. After the terminal device tracks the first satellite, the terminal device may perform the downlink service. For example, the terminal device may receive the downlink information from the first satellite.

When the first satellite is in the orbital change process, the terminal device cannot find the first satellite based on an ephemeris of the first satellite. In this case, the terminal device may search for the first satellite in the preset time domain range based on the preset search frequency range. Although this manner takes a long time, it can be ensured that a terminal finds the first satellite, thereby ensuring communication between the terminal device and the first satellite and ensuring smooth execution of the downlink service.

In a possible implementation, in response to the operation of triggering the terminal device to perform the downlink service, the terminal device may output first prompt information, where the first prompt information is used to guide a user to point the terminal device at the first satellite. In this implementation, before the terminal device searches for the first satellite, the terminal device may output the first prompt information, to guide the user to point the terminal device at the first satellite, to ensure that the terminal device can successfully find the first satellite.

It should be understood that, if the terminal device determines, in response to the operation of triggering the terminal device to perform the downlink service, that the terminal device has been pointed at the first satellite, the terminal device may not output the first prompt information. When the terminal device has been pointed at the first satellite, the terminal device may output information that prompts the user to keep a posture of the terminal device, to ensure that the terminal device can be pointed at the first satellite.

In a possible implementation, when the terminal device responds to the operation of triggering the terminal device to perform the downlink service, and the terminal device is pointed at the first satellite, the terminal device may first search for the first satellite by using a first search strategy. The first search strategy is as follows: The terminal device searches for the first satellite based on an ephemeris of the first satellite.

In this implementation, if the terminal device fails to find the first satellite by using the first search strategy, the terminal device may search for the first satellite by using the second search strategy.

In this implementation, when the terminal device responds to the operation of triggering the terminal device to perform the downlink service, and the terminal device is pointed at the first satellite, the terminal device may not know whether the first satellite is in the orbital change process. Therefore, the terminal device may first search for the first satellite by using the first search strategy. If the terminal device finds the first satellite by using the first search strategy, the terminal device tracks the first satellite. That the terminal device finds the first satellite by using the first search strategy may indicate that the first satellite is not in the orbital change process. If the terminal device fails to find the first satellite by using the first search strategy, the terminal device may search for the first satellite by using the second search strategy. That the terminal device fails to find the first satellite by using the first search strategy may indicate that the first satellite is in the orbital change process.

The terminal device may search for the first satellite based on a preset search strategy. The preset search strategy is as follows: The terminal device first searches for the first satellite by using the first search strategy, and when the first satellite is not found by using the first search strategy, searches for the first satellite by using the second search strategy. In this implementation, the terminal device may ensure that a terminal finds the first satellite, thereby ensuring communication between the terminal device and the first satellite.

In a possible implementation, the terminal device may determine whether the first satellite is in the orbital change process. The following describes a manner in which the terminal device determines whether the first satellite is in the orbital change process.

In a first manner, when the terminal device responds to the operation of performing the downlink service, and the terminal device is pointed at the first satellite, the terminal device may search for the first satellite by using the first search strategy. If the terminal device fails to find the first satellite by using the first search strategy, the terminal device may determine that the first satellite is in the orbital change process. When the terminal device determines that the first satellite is in the orbital change process, the terminal device may find the first satellite by using the second search strategy.

In a second manner, when the terminal device responds to the operation of performing the downlink service, and the terminal device is pointed at the first satellite, if the terminal device obtains an orbital change period of the first satellite in advance, the terminal device may determine whether a current moment is within the orbital change period of the first satellite, to determine whether the first satellite is in the orbital change process.

If the current moment is within the orbital change period of the first satellite, the terminal device determines that the first satellite is in the orbital change process. In this case, the terminal device may find the first satellite by using the second search strategy. If the current moment is not within the orbital change period of the first satellite, the terminal device may search for the first satellite by using the first search strategy.

In some embodiments, a ground station may broadcast the orbital change period of the first satellite in advance. In this way, the terminal device may receive the orbital change period of the first satellite from the ground station in advance, and may obtain the orbital change period of the first satellite in advance.

Compared with the implementation in the "first manner", the implementation in the "second manner" can ensure that the terminal finds the first satellite, and reduce a time for searching for the first satellite by using the first search strategy, thereby improving search efficiency.

In a possible implementation, if the terminal device is at an edge of the coverage of the first satellite, or the terminal device fails to find the first satellite by using the second search strategy due to another factor, the terminal device may change to search for a second satellite or continue to search for the first satellite, to ensure that the terminal device can track a satellite and implement satellite communication.

In an embodiment, if the terminal device fails to find the first satellite by using the second search strategy, the terminal device may output second prompt information, where the second prompt information is used to guide the user to point the terminal device at a second satellite, and the terminal device is within coverage of the second satellite. In other words, when the terminal device fails to find the first satellite by using the second search strategy, the terminal device may change to search for the second satellite, to keep synchronous with the second satellite.

When the terminal device is pointed at the second satellite, if the second satellite is in an orbital change process, the terminal device may search for the second satellite by using the second search strategy. If the terminal device finds the second satellite by using the second search strategy, the terminal device may track the second satellite, to perform the downlink service.

It should be understood that, in a possible implementation, when the terminal device is pointed at the second satellite, the terminal device may first search for the second satellite by using the first search strategy, and when the second satellite is not found by using the first search strategy, the terminal device may search for the second satellite by using the second search strategy. In a possible implementation, when the terminal device is pointed at the second satellite, the terminal device may determine whether the second satellite is in the orbital change process. If the second satellite is in the orbital change process, the terminal device may search for the second satellite by using the second search strategy. If the second satellite is not in the orbital change process, the terminal device searches for the second satellite by using the first search strategy. The first search strategy is searching for the second satellite based on an ephemeris of the second satellite. For a manner in which the terminal device determines whether the second satellite is in the orbital change process, refer to the related descriptions of the terminal device determining whether the first satellite is in the orbital change process.

In an embodiment, if the terminal device fails to find the first satellite by using the second search strategy, the terminal device may continue to search for the first satellite by using the second search strategy until the first satellite is found.

To avoid reduced user experience due to an excessively long search time, in a possible implementation, the terminal device stops searching for the first satellite when a quantity of times that the terminal device searches for the first satellite by using the second search strategy reaches a preset quantity of times, or a duration that the terminal device searches for the first satellite by using the second search strategy reaches a preset duration, and the first satellite is still not found.

In this implementation, when the terminal device fails to find the first satellite by using the second search strategy, the terminal device may change to search for the second satellite, or continue to search for the first satellite. This is to ensure that the terminal device can be smoothly synchronous with the satellite, to successfully perform the downlink service.

According to a second aspect, an embodiment of this application provides an electronic device. The electronic device may include a processor and a memory. The memory is configured to store computer-executable program code, where the program code includes instructions. When the processor executes the instructions, the instructions enable the electronic device to perform the method according to the first aspect.

According to a third aspect, an embodiment of this application provides an electronic device. The electronic device may be the terminal device according to the first aspect. The electronic device may include a unit, a module, or a circuit configured to perform the method provided in the first aspect.

According to a fourth aspect, an embodiment of this application provides a computer program product including instructions. When the computer program product is run on a computer, the computer is enabled to perform the method in the first aspect.

According to a fifth aspect, an embodiment of this application provides a computer-readable storage medium. The computer-readable storage medium stores instructions. When the instructions are run on a computer, the computer is enabled to perform the method in the first aspect.

For beneficial effects of the possible implementations of the second aspect to the fifth aspect, refer to the beneficial effects brought by the first aspect. Details are not described herein again.

According to the communication method provided in embodiments of this application, when a terminal device performs a downlink service, and the terminal device is pointed at a first satellite, if the first satellite is in an orbital change process, the terminal device may search for the first satellite by using a second search strategy. The second search strategy is as follows: The terminal device searches in a preset time domain range based on a preset search frequency range. In this case, if the terminal device finds the first satellite, the terminal device tracks the first satellite, that is, keeps synchronous with the satellite. In this application, during the orbital change process of the satellite, the terminal device still searches for the first satellite in the preset time domain range based on the preset search frequency range. When the first satellite covers the terminal device, the terminal device may find the first satellite, to ensure tracking of the satellite.

### BRIEF DESCRIPTION OF DRAWINGS

FIG. 1A is a diagram of a system architecture to which an embodiment of this application is applicable;
FIG. 1B is a diagram in which a satellite 1 and a satellite 2 cover a terminal device;
FIG. 2A is a diagram in which a terminal device searches for a satellite;
FIG. 2B is another diagram in which a terminal device searches for a satellite;
FIG. 3 is a diagram of satellite operation;
FIG. 4 is a schematic flowchart of an embodiment of a communication method according to an embodiment of this application;
FIG. 5A-a to FIG. 5A-d are diagrams of an interface of a terminal device according to an embodiment of this application;
FIG. 5B-a to FIG. 5B-e are diagrams of another interface of a terminal device according to an embodiment of this application;

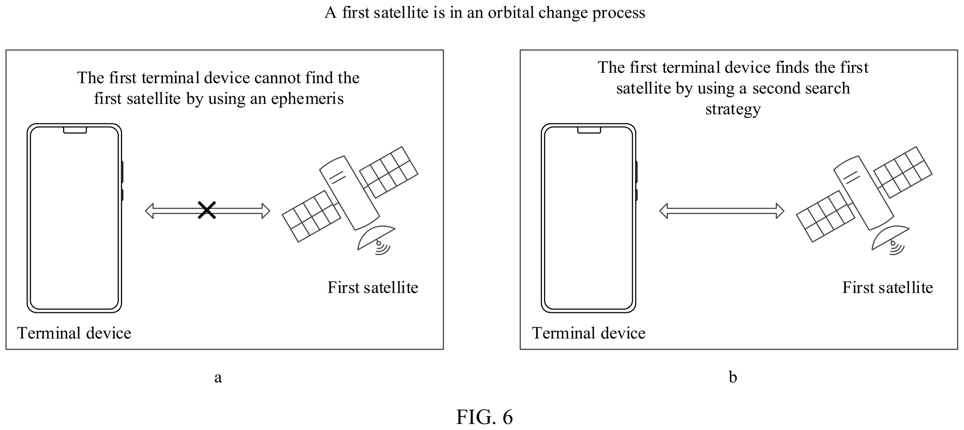

FIG. 6 are diagrams comparing a terminal device searching for a satellite in an embodiment of this application and in a conventional technology;

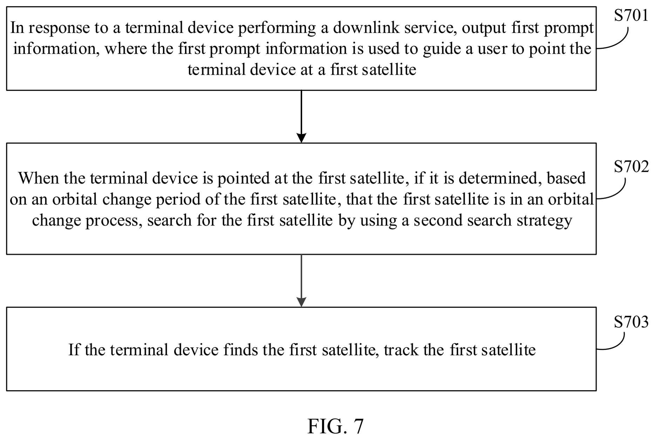

FIG. 7 is a schematic flowchart of another embodiment of a communication method according to an embodiment of this application;

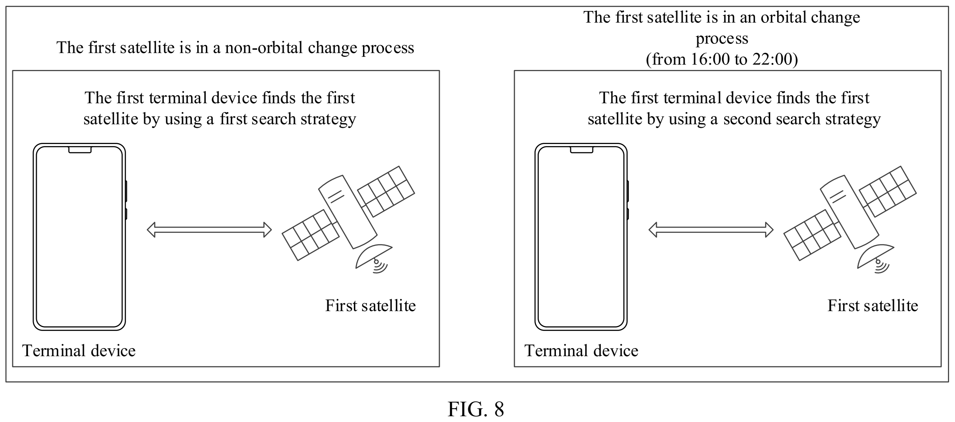

FIG. 8 is a diagram in which a terminal device searches for a satellite according to an embodiment of this application;

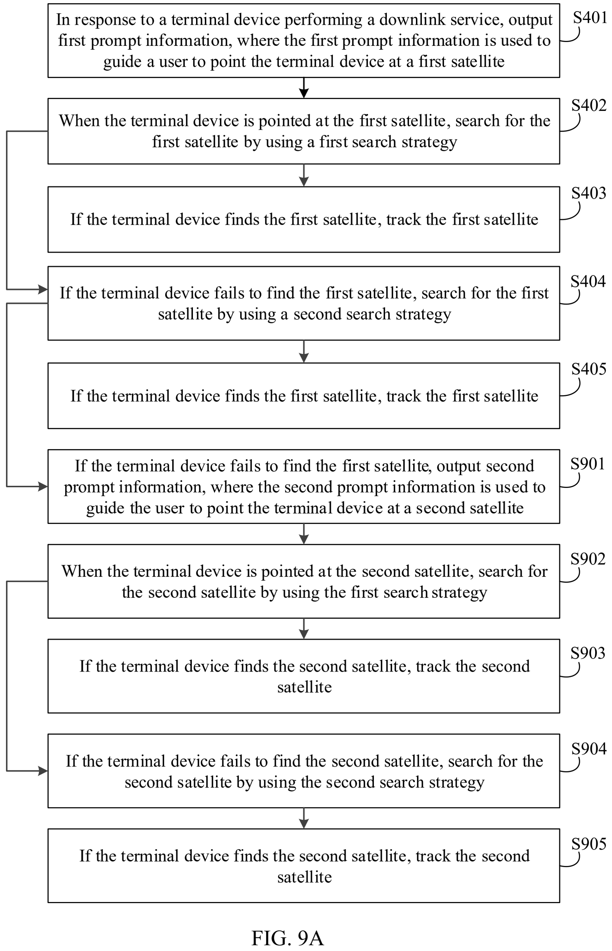

FIG. 9A is a schematic flowchart of another embodiment of a communication method according to an embodiment of this application;

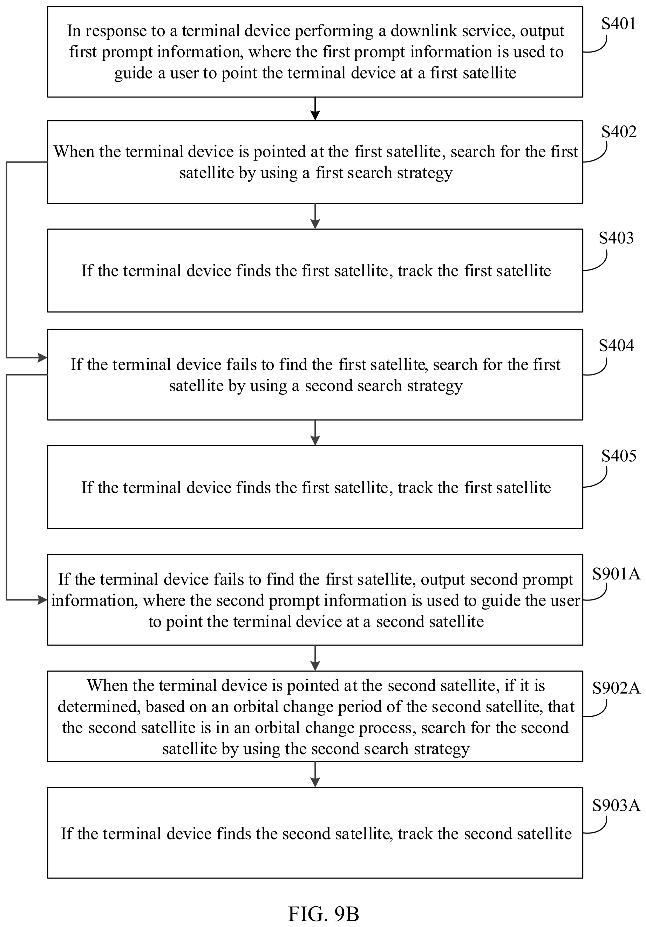

FIG. 9B is a schematic flowchart of another embodiment of a communication method according to an embodiment of this application;

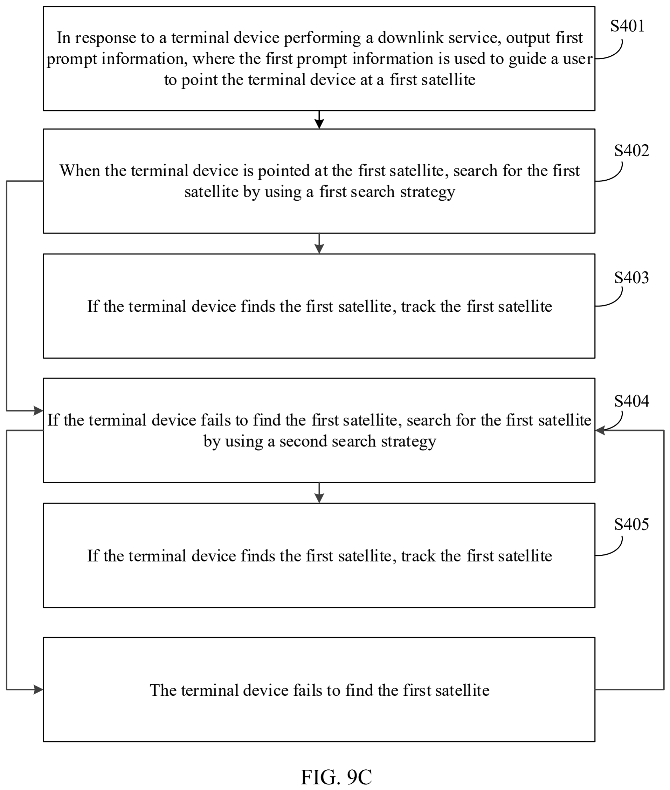

FIG. 9C is a schematic flowchart of another embodiment of a communication method according to an embodiment of this application;
FIG. 10A-1 and FIG. 10A-2 are a schematic flowchart of another embodiment of a communication method according to an embodiment of this application;

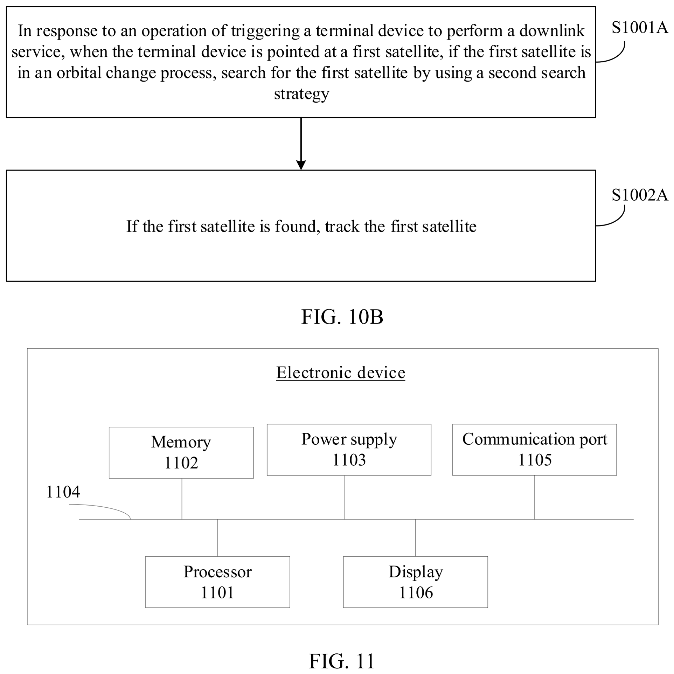

FIG. 10B is a schematic flowchart of another embodiment of a communication method according to an embodiment of this application; and
FIG. 11 is a diagram of a structure of an electronic device according to an embodiment of this application.

### DESCRIPTION OF EMBODIMENTS

A terminal device in embodiments of this application is a device with a satellite communication capability, and the terminal device may be referred to as user equipment (user equipment, UE), a terminal (terminal), or the like. For example, the terminal device may be a mobile phone, a portable Android device (portable Android device, PAD), a personal digital assistant (personal digital assistant, PDA), a handheld device, a computing device, a vehicle-mounted device or a wearable device with a wireless communication function, a virtual reality (virtual reality, VR) terminal device, an augmented reality (augmented reality, AR) terminal device, a wireless terminal in industrial control (industrial control), a wireless terminal in a smart home (smart home), or the like. A form of the terminal device is not specifically limited in embodiments of this application.

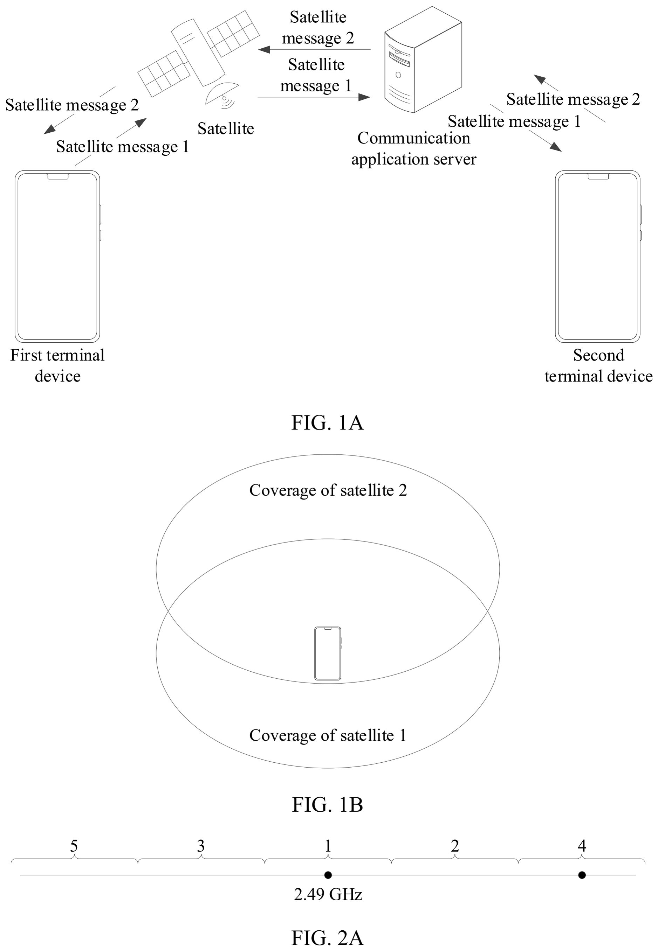

Herein, FIG. 1A is used as an example to describe an application scenario in which a terminal device performs satellite communication. FIG. 1A is a diagram of a system architecture to which an embodiment of this application is applicable. Refer to FIG. 1A. The system architecture may include a first terminal device, a satellite communication system, a communication application server, and a second terminal device. It should be understood that the system architecture shown in FIG. 1A is a system architecture in which terminal devices communicate with each other through a satellite network without coverage of a terrestrial network such as a cellular network, a Wi-Fi network, or a Bluetooth network. The satellite communication system may include a ground station, a satellite, and the like. It should be understood that only the satellite is shown in FIG. 1A. For example, an area without the coverage of the terrestrial network such as the cellular network, the Wi-Fi network, or the Bluetooth network may be understood as an area that is not covered by the terrestrial network, for example, an ocean, a desert, a grassland, or an uninhabited area.

In an example, a communication application may be installed on the first terminal device and the second terminal device. The communication application is used to support satellite communication of the first terminal device and the second terminal device. For example, the satellite application may be used to receive and send a satellite message. Refer to FIG. 1A. When the first terminal device is not covered by the terrestrial network such as the cellular network, the Wi-Fi network, or the Bluetooth network, and the second terminal device is covered by the terrestrial network such as the cellular network, the Wi-Fi network, or the Bluetooth network, a user may operate the communication application in the first terminal device, to trigger the first terminal device to send a satellite message 1 to the second terminal device. The satellite message 1 from the first terminal device may reach the second terminal device sequentially via the satellite and the communication application. Similarly, the first terminal device may receive a satellite message 2 from the second terminal device.

It should be understood that in FIG. 1A, an example in which the satellite message is sent and received between the first terminal device and the second terminal device is used for description. The first terminal device and the second terminal device may further perform another type of service through the satellite network. This is not limited in embodiments of this application. It should be noted that the communication method provided in embodiments of this application is applicable to the first terminal device and the satellite. In the following embodiments, the first terminal device is referred to as a terminal device.

Definitions of terms in embodiments of this application are as follows.

Uplink information: In embodiments of this application, uplink information is information sent by a terminal device to a satellite. For example, the uplink information may be information sent by the terminal device before it tracks the satellite, information sent by the terminal device after a tracking failure, or information sent by the terminal device after it tracks the satellite. This is not limited in embodiments of this application. It should be understood that, that the terminal device tracks the satellite may be understood as follows: The terminal device tracks the satellite in time domain and frequency domain, that is, the terminal device keeps synchronous with the satellite. In the following embodiments, "the terminal device tracks the satellite in time domain and frequency domain" is referred to as "the terminal device tracks the satellite" for short.

In an embodiment, the information sent by the terminal device before it tracks the satellite or the information sent by the terminal device after a tracking failure may be referred to as blindly transmitted information. The blindly transmitted information of the terminal device may be used as an uplink service. The information sent by the terminal device after it tracks the satellite may be referred to as non-blindly transmitted information. The non-blindly transmitted information of the terminal device may also be used as an uplink service.

Downlink information: In embodiments of this application, downlink information is information sent by a satellite to a terminal device. A prerequisite for the terminal device to receive information from the satellite is that the terminal device tracks the satellite. In other words, the terminal device can receive the information from the satellite only after the terminal device tracks the satellite.

Pointing at a satellite: In embodiments of this application, pointing at a satellite means adjusting a posture of a terminal device, so that the terminal device is pointed at the satellite, and the terminal device can search for or capture the satellite.

Searching for a satellite: Before a terminal device is synchronized with a satellite, that is, before the terminal device tracks the satellite, the terminal device needs to search for the satellite. In an example, that the terminal device searches for the satellite may also be referred to as that the terminal device captures the satellite. When the terminal device finds the satellite or when the terminal device captures the satellite, the terminal device may track the satellite in time domain and frequency domain, to keep synchronous with the satellite and implement satellite communication.

In the following embodiments, an example in which a process of tracking the satellite by the terminal device includes three phases is used for description. In phase 1, the terminal device is pointed at the satellite. In phase 2, the terminal device searches for the satellite, but has not tracked the satellite, that is, has not been synchronized with the satellite. In phase 3, the terminal device finds the satellite, and tracks the satellite in time domain and frequency domain, that is, the terminal device keeps synchronous with the satellite.

Ephemeris (ephemeris): An ephemeris is a precise position or trajectory table that changes with time when a satellite is running, and is a function of time. In an example, the ephemeris may include a broadcast ephemeris and a predicted ephemeris. The satellite may broadcast an ephemeris at an interval of a preset duration, which may be referred to as a broadcast ephemeris. For example, the preset duration may be 2 hours. The broadcast ephemeris is predictive and can be used in real time. The predicted ephemeris may be understood as an ephemeris of a future time that is predicted based on a historical broadcast ephemeris. A manner used for predicting an ephemeris is not limited in embodiments of this application.

Orbital change of a satellite: A process in which a satellite autonomously changes an orbit during an on-orbit phase is referred to as an orbital change.

Optimal satellite: An optimal satellite may be understood as a satellite with best satellite communication quality for a terminal device. For example, refer to FIG. 1B. The terminal device is within coverage of a satellite 1 and coverage of a satellite 2. The terminal device is at an edge of the coverage of the satellite 2, but is at a central location of the coverage of the satellite 1. Therefore, for the terminal device, the satellite 1 may be used as an optimal satellite, and correspondingly, for the terminal device, the satellite 2 may be used as a suboptimal satellite.

In an embodiment, the terminal device may store coverage information of the satellite, and the terminal device may determine the optimal satellite of the terminal device based on a location of the terminal device and the coverage information of the satellite. A method for determining the optimal satellite by the terminal device is not limited in embodiments of this application. The coverage information of the satellite may indicate the coverage of the satellite.

The terminal device may send the uplink information in a blind manner or a non-blind manner. That the terminal device sends the uplink information in a blind manner may be understood as that the terminal device sends the uplink information before tracking the satellite. That the terminal device sends the uplink information in a non-blind manner may be understood as that the terminal device sends the uplink information after tracking the satellite. Because the satellite can capture and track the uplink information from the terminal device in real time, even if the terminal device does not track the satellite, the satellite can capture and track the uplink information from the terminal device, that is, the satellite can receive the uplink information. When the terminal device sends the uplink information in a non-blind manner, because the terminal device tracks the satellite, the terminal device may receive, from the satellite, response information for the uplink information. When the terminal device sends the uplink information in a blind manner, because the terminal device does not track the satellite, the terminal device cannot receive, from the satellite, response information for the uplink information. However, regardless of whether the terminal device tracks the satellite, the satellite can receive the uplink information from the terminal device.

However, for downlink information, if the terminal device does not track the satellite, after the satellite sends the downlink information, the terminal device cannot receive the downlink information from the satellite. In other words, a prerequisite for the terminal device to receive the downlink information from the satellite is that the terminal device tracks the satellite, that is, the terminal device keeps synchronous with the satellite.

Before the terminal device tracks the satellite, the terminal device needs to search for the satellite. The terminal device may search for the satellite in time domain and frequency. FIG. 2A is a diagram in which a terminal device searches for a satellite. Refer to FIG. 2A. An example in which the terminal device searches for the satellite in frequency domain is used. For example, a satellite communication frequency of the terminal device is 2.49 GHz, and satellite Doppler caused by a velocity of satellite motion is at a frequency of 2.49 GHz + 1200 Hz. In some embodiments, it is assumed that a preset search frequency range of the terminal device is 700 Hz, and the terminal device starts searching by using 2.49 GHz as a reference. According to a rule for searching for the satellite, the terminal device searches for -350 Hz to 350 Hz for the first time, searches for +350 Hz to +1050 Hz for the second time, searches for -350 Hz to -1050 Hz for the third time, searches for +1050 Hz to +1800 Hz for the fourth time, and searches for -1050 Hz to -1800 Hz for the fifth time. The satellite can be found only after five searches. In FIG. 2A, numbers 1 to 5 are used to describe the five searches of the terminal device. The rule for searching for the satellite is not limited in embodiments of this application.

It should be understood that the preset search frequency range is related to a capability of a communication chip used for satellite communication in the terminal device.

To improve search efficiency of the terminal device, currently, the terminal device may calculate a location and a velocity of the satellite and a location and a velocity of the terminal device based on an ephemeris of the satellite, to calculate a transmission delay and satellite Doppler. The terminal device may separately perform time domain compensation and frequency domain compensation based on the transmission delay and the satellite Doppler when searching for the satellite, to quickly find the satellite. The transmission delay may be calculated based on a distance between the terminal device and the satellite, and the satellite Doppler may be calculated based on the velocity of the satellite and the velocity of the terminal device. This process is not described in detail in embodiments of this application. In an embodiment, a strategy for the terminal device to search for the satellite based on the ephemeris may be referred to as a first search strategy.

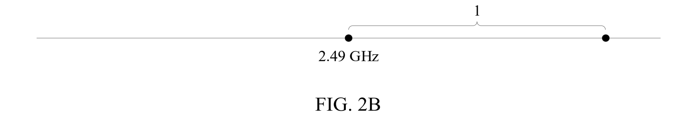

The first search strategy is described herein by using an example. For example, refer to FIG. 2B. For example, the terminal device compensates in frequency domain based on the satellite Doppler. If the terminal device determines, based on the satellite Doppler, that a frequency offset is +1200 Hz, the terminal device may adjust a frequency search range. For example, if an adjusted search range is searching for +1200 Hz by using 2.49 GHz as a reference, the terminal device can find the satellite by one search. A process in which the terminal device compensates for time domain based on the transmission delay is not described in detail in embodiments of this application. For details, refer to the related descriptions in the conventional technology.

When the satellite is on orbit, the terminal device may quickly find the satellite by using the first search strategy, and then successfully receive the downlink information from the satellite. However, the satellite may experience an orbital change. During an orbital change process of the satellite, the ephemeris cannot be used. As a result, the terminal device cannot find a satellite with good communication quality, or even cannot find a satellite, thereby affecting satellite communication of the terminal device. In an example, before the satellite experiences the orbital change, an orbital change period of the satellite may be sent to the terminal device. The period may include a time at which the satellite starts the orbital change and a time at which the satellite ends the orbital change.

Currently, during the orbital change process of the satellite, if the terminal device is not covered by the terrestrial network such as the cellular network, the Wi-Fi network, or the Bluetooth network, the terminal device may sense the orbital change of the satellite based on the orbital change period of the satellite. During the orbital change process of the satellite, the terminal device cannot find the satellite based on the ephemeris of the satellite. As a result, the terminal device cannot perform satellite communication. In addition, the terminal device may directly skip the satellite, and search for another satellite based on an ephemeris of the another satellite. This manner may result in poor satellite communication quality for the terminal device. For example, if the satellite 1 experiences an orbital change, the terminal device cannot find the satellite 1, or the terminal device may skip the satellite 1 and track the satellite 2. Satellite communication quality between the terminal device and the satellite 2 is poorer than that between the terminal device and the satellite 1.

Based on the foregoing problem, a method is urgently needed that allows the terminal device to find the satellite and track the satellite during the orbital change process of the satellite.

Before the communication method provided in embodiments of this application is described, characteristics of satellite operation are first analyzed.

For example, satellites that support satellite message receiving and sending include three satellites, which are 36000 kilometers away from the ground. In an example, the three satellites may be geosynchronous earth orbit (geosynchronous earth orbit, GEO) satellites, and the GEO satellites move in geostationary orbits. A type of the satellite is not limited in embodiments of this application.

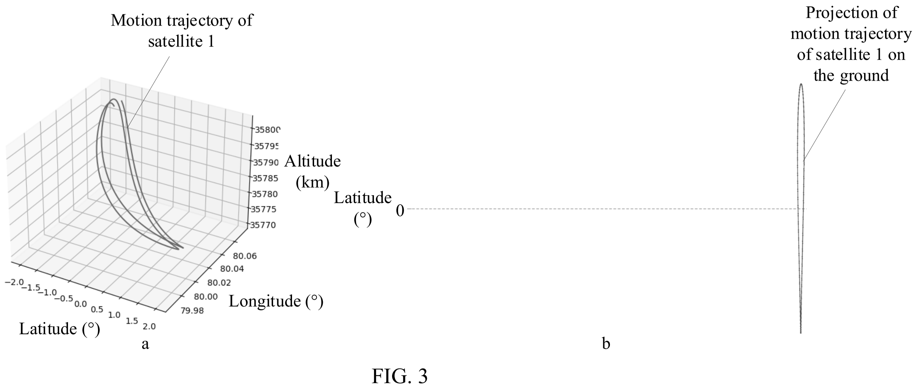

In an ideal environment, a projection of a motion trajectory of a satellite on the ground is a point. However, due to joint effect of factors such as weather, gravitational force, and sunlight pressure, the projection of the motion trajectory of the satellite on the ground is actually a long bar, as shown in b in FIG. 3. For example, a satellite 1 is used as an example. According to historical ephemeris statistics of the satellite 1, it may be learned that an altitude of the satellite 1 relative to the ground ranges from a maximum of 35,803.065 km to a minimum of 35,738.995 km. In addition, a maximum latitude change range of motion of the satellite 1 is 4°, and a distance change caused by the latitude change is about 85 km. For a diagram of a three-dimensional motion change of the satellite 1, refer to a in FIG. 3.

In conclusion, it can be learned that a motion distance of the satellite 1 is about 150 km based on the following calculation: 35,803.065 km - 35,738.995 km + 85 km ≈ 150 km. It is assumed that a maximum radial velocity of the satellite does not exceed a velocity threshold. For example, the velocity threshold is 40 m/s. In this embodiment of this application, durations that the terminal device searches for the satellite with and without an ephemeris are separately calculated. When there is an ephemeris, for example, during an on-orbit phase of the satellite, a duration that the satellite searches for the terminal device is a first duration. When there is no ephemeris, for example, during an orbital change process of the satellite, a duration that the satellite searches for the terminal device is a second duration. The second duration is greater than the first duration. For example, the first duration is 1s, and the second duration is 23s.

Therefore, it can be learned that with satellite coverage and during a satellite orbital change, although the terminal device cannot obtain the ephemeris of the satellite, the terminal device can find the satellite after a long time (for example, 23s) of search. Therefore, this embodiment of this application provides a communication method. During the orbital change process of the satellite, the terminal device may search for the satellite continuously. This manner causes a long search time, but finally the terminal device can find the satellite, ensuring satellite communication for the terminal device.

For example, when a user is in an uninhabited area with satellite coverage, if the satellite experiences an orbital change, based on the method in the conventional technology, the terminal device does not search for the satellite, or cannot find the satellite. However, in the communication method provided in embodiments of this application, if the satellite experiences an orbital change, the terminal device continuously searches for the satellite. Although a waiting duration of the user is long, it can be ensured that the terminal device can find the satellite, so that the user can use the terminal device to perform satellite communication, which can improve user experience.

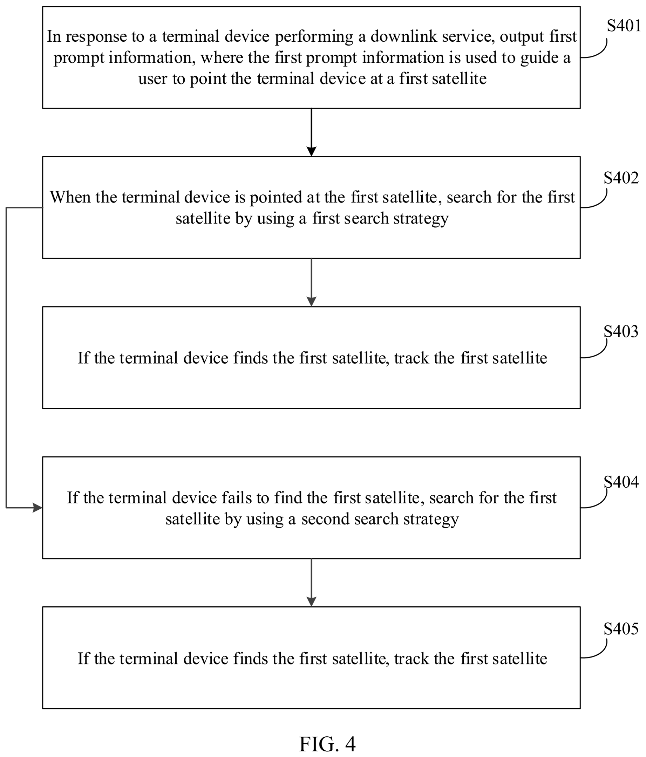

The communication method provided in embodiments of this application is described below with reference to specific embodiments. The following several embodiments may be combined with each other, and a same or similar concept or process may not be described repeatedly in some embodiments. FIG. 4 is a schematic flowchart of an embodiment of a communication method according to an embodiment of this application. Refer to FIG. 4. The communication method provided in embodiments of this application may include the following steps.

S401: In response to a terminal device performing a downlink service, output first prompt information, where the first prompt information is used to guide a user to point the terminal device at a first satellite.

The first satellite is a satellite that covers the terminal device. In this embodiment of this application, there is at least one satellite that covers the terminal device, and the first satellite is included in the at least one satellite.

In an embodiment, the terminal device may be prefigured with coverage of a satellite. The terminal device may determine, based on a location of the terminal device and the coverage of the satellite, the satellite that covers the terminal device. When there are a plurality of satellites that covers the terminal device, the terminal device may use an optimal satellite as the first satellite, use a suboptimal satellite as a second satellite, and so on. When there is one satellite that covers the terminal device, the terminal device may use the satellite as the first satellite.

In an embodiment, the terminal device may be preconfigured with a satellite list, and the satellite list indicates sorting of satellites. In this embodiment, the terminal device may use, based on the satellite list, a satellite that is ranked first as the first satellite, a satellite that is ranked second as the second satellite, and so on. A satellite sorting manner is not limited in embodiments of this application.

In this embodiment of this application, the user may trigger the terminal device to perform the downlink service, or the terminal device may perform the downlink service at a specific time point. A manner of triggering the terminal device to perform the downlink service is not limited in embodiments of this application. For example, when the user triggers the terminal device to perform the downlink service, the terminal device detects an operation performed by the user to trigger the terminal device to perform the downlink service.

For example, when the user triggers the terminal device to perform the downlink service, the terminal device may include a communication application. For example, the communication application is an application used to receive and send a satellite message. Refer to FIG. 5A-a. An interface of the communication application may include a control 51 that triggers the terminal device to receive a message. The user operates the control 51 to trigger the terminal device to receive a message from the satellite, that is, trigger the terminal device to perform the downlink service.

In an embodiment, in response to the terminal device performing the downlink service, the terminal device may output the first prompt information. The first prompt information is used to guide the user to point the terminal device at the first satellite. Specifically, the first prompt information is used to guide the user to adjust a posture of the terminal device, to point the terminal device at the first satellite.

In an embodiment, in response to the terminal device performing the downlink service, the terminal device may detect whether the terminal device is pointed at the first satellite. If the terminal device is not pointed at the first satellite, the terminal device may output the first prompt information. If the terminal device is pointed at the first satellite, the terminal device may not output the first prompt information. In this embodiment, when the terminal device is not pointed at the first satellite, the terminal device may output the first prompt information, to accurately guide the user, thereby avoiding affecting user experience due to excessive output of the first prompt information.

A manner in which the terminal device outputs the first prompt information is not limited in embodiments of this application. For example, the terminal device may guide the user to point the terminal device at the first satellite in a voice guidance manner, or the terminal device may guide the user to point the terminal device at the first satellite in an interface guidance manner. Herein, an example in which the terminal device uses the interface guidance manner is used.

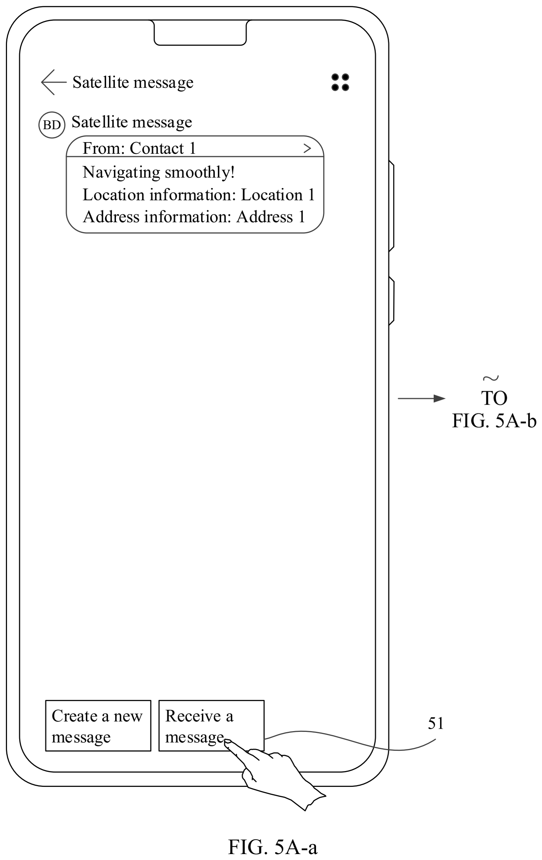

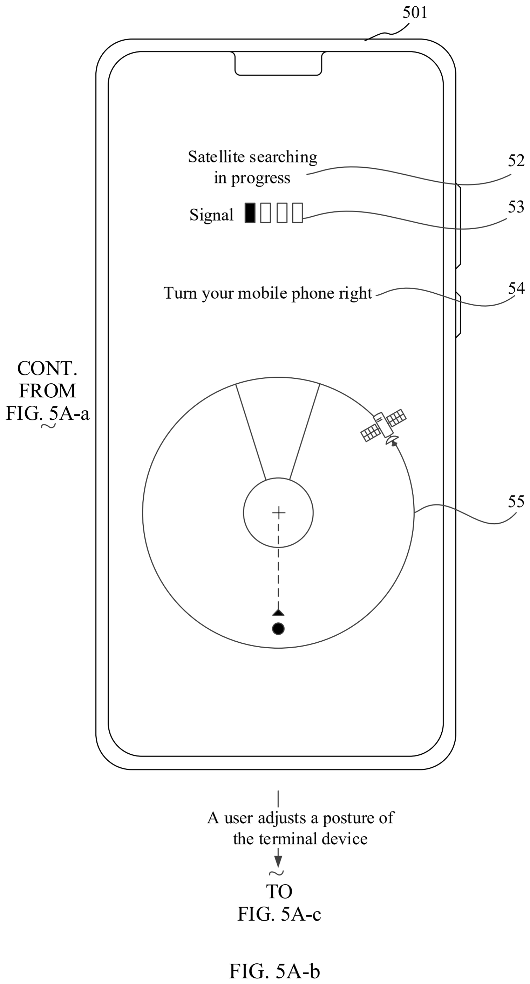

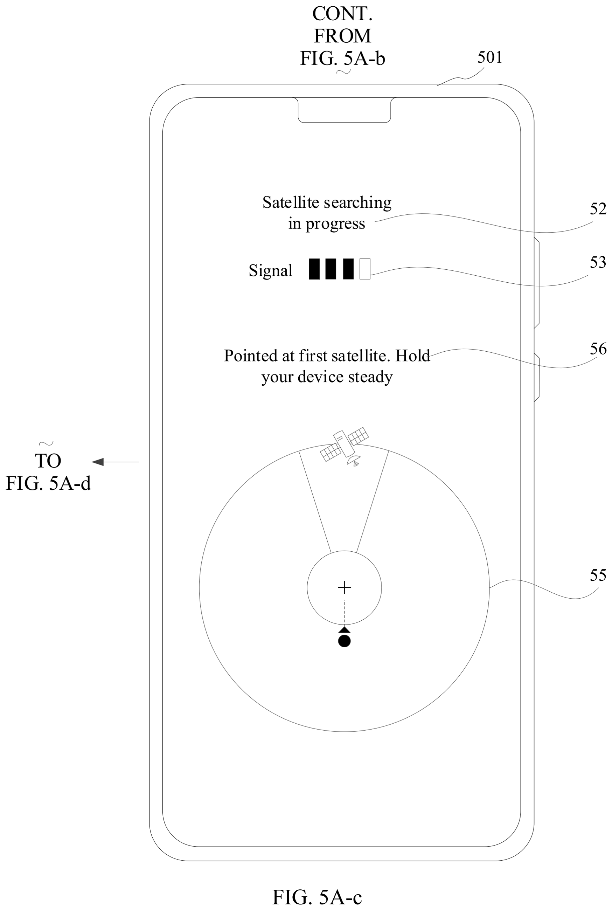

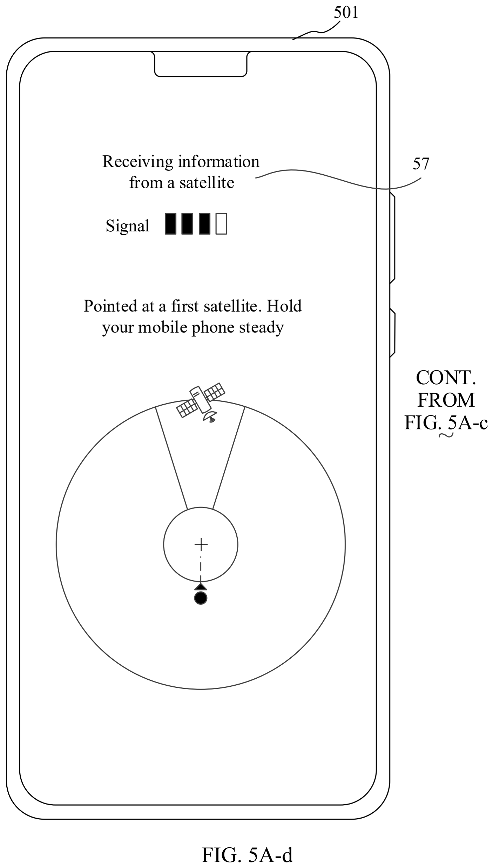

Refer to FIG. 5A-a. The user operates the control 51, and the terminal device may display the satellite searching interface 501. All content displayed on the satellite searching interface 501 may be used as the first prompt information. Refer to FIG. 5A-b. The satellite searching interface 501 may include but is not limited to: an identifier 52 of satellite searching in progress, an identifier 53 of signal strength of the first satellite, information 54 for guiding the user to adjust the posture of the terminal device, and a diagram 55 of a location of the terminal device relative to the first satellite. The user may adjust the posture of the terminal device based on the information 54 for guiding the user to adjust the posture of the terminal device, so that the terminal device is pointed at the first satellite.

When the user adjusts the posture of the terminal device so that the terminal device is pointed at the first satellite, the satellite searching interface 501 may display information 56 indicating that pointing succeeds, as shown in FIG. 5A-c.

S402: When the terminal device is pointed at the first satellite, search for the first satellite by using a first search strategy.

The first search strategy is as follows: The terminal device searches for the first satellite based on an ephemeris of the first satellite. For details, refer to the related descriptions in the foregoing embodiments.

It should be noted that the ephemeris of the first satellite obtained by the terminal device is an ephemeris of the first satellite when the first satellite is on orbit. When the first satellite experiences an orbital change, the ephemeris cannot be used, or the terminal device cannot find the first satellite based on the ephemeris of the first satellite.

S403: If the terminal device finds the first satellite, track the first satellite.

During an on-orbit phase of the first satellite, the terminal device may find the first satellite based on the ephemeris of the first satellite, so that the terminal device can track the first satellite.

S404: If the terminal device fails to find the first satellite, search for the first satellite by using a second search strategy.

It should be understood that S403 and S404 are steps to be performed alternatively.

During the orbital change process of the first satellite, the terminal device cannot find the first satellite by using the first search strategy. In this case, the terminal device may determine that the first satellite is experiencing an orbital change. Therefore, the terminal device may search for the first satellite by using the second search strategy.

With reference to FIG. 3, for example, a motion distance of the first satellite is approximately 150 km, a velocity threshold is 40 m/s, and a time domain error of the first satellite is 1 ms. In this case, each time the terminal device searches for the first satellite based on a preset search frequency range, the time domain error is 1 ms. In an embodiment, the time domain error of the first satellite being 1 ms may be used as a preset time domain range. The motion distance and the velocity threshold of the first satellite shown in FIG. 3 are used as examples for description. Accordingly, the preset time domain range of 1 ms is also used as an example for description. For a different satellite, a preset time domain range may be determined based on information such as a motion distance and a velocity of the satellite.

The second search strategy is as follows: The terminal device searches for the first satellite in the preset time domain range based on the preset search frequency range instead of the first ephemeris. For example, if the preset search frequency range is 700 Hz, and the preset time domain range is 1 ms, the terminal device may perform a search in frequency domain based on 700 Hz, and perform a search in the time domain range of 1 ms based on a preset search chip. It should be understood that the preset search chip is a chip used when the terminal device performs a satellite search, and the preset search chip may also be referred to as a preset search step.

In this embodiment of this application, during the orbital change process of the first satellite, the terminal device may search for the first satellite in the preset time domain range based on the preset search frequency range of the terminal device. Although a search duration of this manner is longer than that of using the first search strategy, the terminal device can find the first satellite. During the orbital change process of the satellite, a in FIG. 6 shows an example in the conventional technology in which the terminal device does not search for the first satellite or cannot find the first satellite based on the ephemeris of the first satellite. Compared with the conventional technology, in the solution in this application, the terminal device can find the first satellite by using the second search strategy, so that satellite communication of the terminal device can be ensured, as shown in b in FIG. 6.

When the terminal device finds the first satellite, the terminal device may display information 57 that indicates to start to perform the downlink service. Refer to FIG. 5A-d. For example, the information 57 may be "Information is being received from the satellite".

S405: If the terminal device finds the first satellite, track the first satellite.

In this embodiment of this application, when the terminal device performs the downlink service, the terminal device may guide the user to point the terminal device at the first satellite. When the terminal device is pointed at the first satellite, the terminal device may first search for the first satellite by using the first search strategy. If the terminal device cannot find the first satellite by using the first search strategy, the terminal device may determine that the first satellite is in the orbital change process, and may continue to search for the first satellite by using the second search strategy, so that the terminal device can find the first satellite and track the first satellite, to ensure smooth execution of the downlink service.

In an embodiment, a terminal device may obtain an orbital change period of a first satellite in advance. In this embodiment, during an orbital change process of the first satellite, the terminal device has determined that the first satellite is experiencing an orbital change, and the first satellite cannot be found by using a first search strategy. Therefore, the terminal device may directly search for the first satellite by using a second search strategy, thereby improving search efficiency.

In this embodiment, refer to FIG. 7. The communication method provided in embodiments of this application may include the following steps.

S701: In response to the terminal device performing a downlink service, output first prompt information, where the first prompt information is used to guide a user to point the terminal device at the first satellite.

For S701, refer to the descriptions in S401.

S702: When the terminal device is pointed at the first satellite, if it is determined, based on the orbital change period of the first satellite, that the first satellite is in the orbital change process, search for the first satellite by using the second search strategy.

In an embodiment, a worker at a ground station may periodically or irregularly calibrate the first satellite. Before the orbital change of the first satellite, the ground station may broadcast the orbital change period of the first satellite to a terminal device covered by a terrestrial network. If the terminal device is within coverage of the terrestrial network, the terminal device may receive the orbital change period from the first satellite. When the terminal device obtains the orbital change period of the first satellite, after the terminal device is pointed at the first satellite, the terminal device may detect, based on the orbital change period of the first satellite, whether the first satellite is in the orbital change process. If a current moment is within the orbital change period of the first satellite, the terminal device determines that the first satellite is in the orbital change process. If a current moment is not within the orbital change period of the first satellite, the terminal device determines that the first satellite is not in the orbital change process.

When the first satellite is not in the orbital change process, the terminal device may search for the first satellite by using the first search strategy. When the first satellite is in the orbital change process, because the terminal device cannot find the first satellite by using the first search strategy, in this embodiment of this application, the terminal device may directly search for the first satellite by using the second search strategy.

For example, if the orbital change period of the first satellite is from 16:00 to 22:00 tomorrow, the first satellite may broadcast the orbital change period of the first satellite at 16:00 today. If the terminal device is within coverage of the terrestrial network at 16:00 today, the terminal device may obtain the orbital change period of the first satellite. Refer to FIG. 8. In the period from 16:00 to 22:00 tomorrow, when performing the downlink service, the terminal device may search for the first satellite by using the second search strategy, and in another period (except the period from 16:00 to 22:00 tomorrow), the terminal device may search for the first satellite by using the first search strategy.

It should be noted that the first satellite may broadcast the orbital change period of the first satellite before the orbital change. A time at which the first satellite starts to broadcast the orbital change period of the first satellite is not limited in embodiments of this application. For example, the first satellite may broadcast the orbital change period one day in advance, or one week in advance.

S703: If the terminal device finds the first satellite, track the first satellite.

In this embodiment of this application, because the terminal device may obtain the orbital change period of the first satellite in advance, when the satellite experiences the orbital change, the terminal device may directly search for the first satellite by using the second search strategy when performing the downlink service. This can avoid a delay caused by searching for the first satellite by using the first search strategy, reduce a duration that the terminal device searches for the first satellite, and improve search efficiency.

In embodiments shown in FIG. 4 and FIG. 7, the scenario in which the terminal device finds the first satellite by using the second search strategy is described. In a possible scenario, if the terminal device is at an edge of coverage of the first satellite, the terminal device may fail to find the first satellite by using the second search strategy. In this scenario, to ensure satellite communication of the terminal device, the terminal device may, according to the following Manner 1, continue to search for a second satellite that covers the terminal device, or the terminal device may, according to the following Manner 2, continue to search for the first satellite by using the second search strategy.

In this embodiment, after S404 or S702, S901 to S905, or S901A to S903A in Manner 1, or Manner 2 may be further performed, as shown in FIG. 9A to FIG. 9C. It should be understood that, in FIG. 9A, S901 to S905 are performed after S404, in FIG. 9B, S901A to S903A are performed after S404, and in FIG. 9C, S404 is performed after S404.

### Manner 1:

S901: If the terminal device fails to find the first satellite, output second prompt information, where the second prompt information is used to guide the user to point the terminal device at the second satellite.

The second satellite is a satellite that covers the terminal device. If the terminal device fails to find the first satellite by using the second search strategy, the terminal device may attempt to search for the second satellite.

In this embodiment of this application, if the terminal device fails to find the first satellite, the terminal device may output the second prompt information. The second prompt information is used to guide the user to point the terminal device at the second satellite. It may be understood that the second prompt information is further used to prompt the user that the satellite searched by the terminal device is changed.

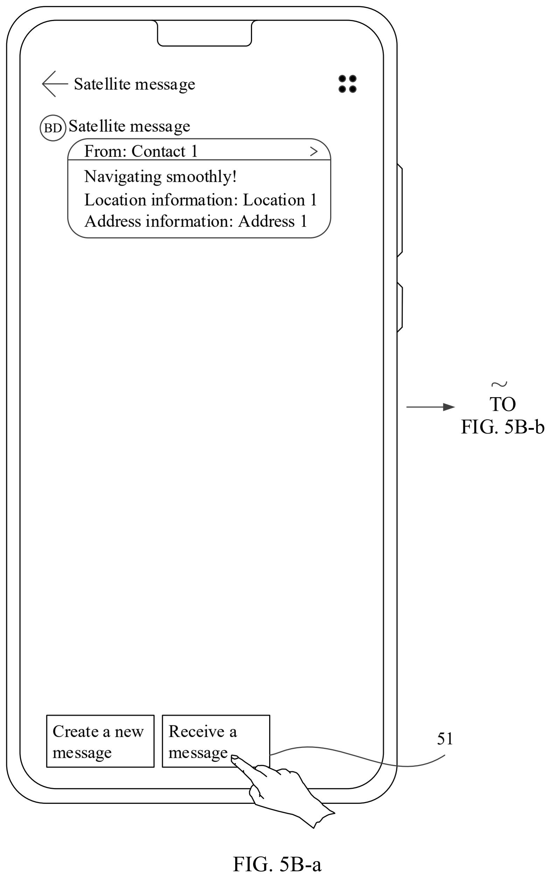

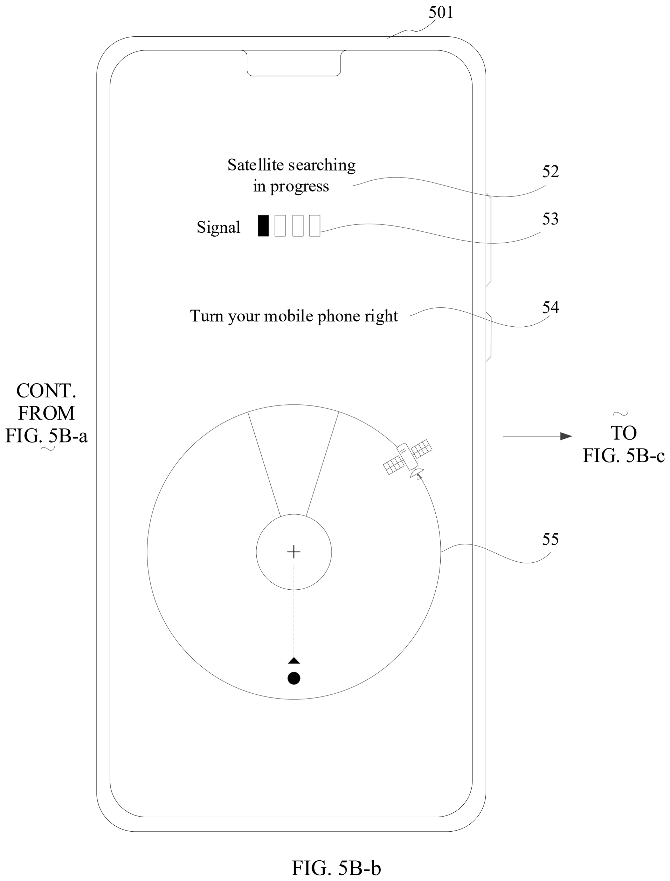

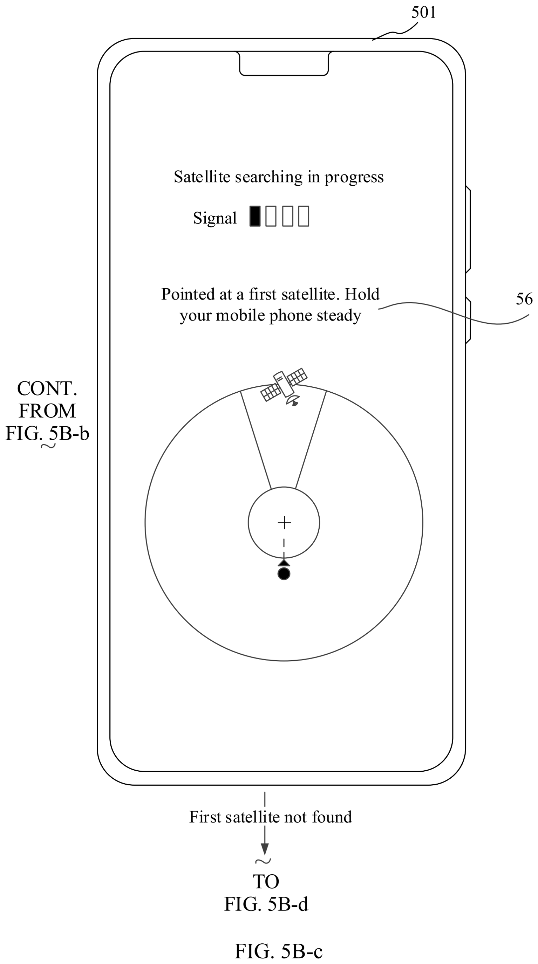

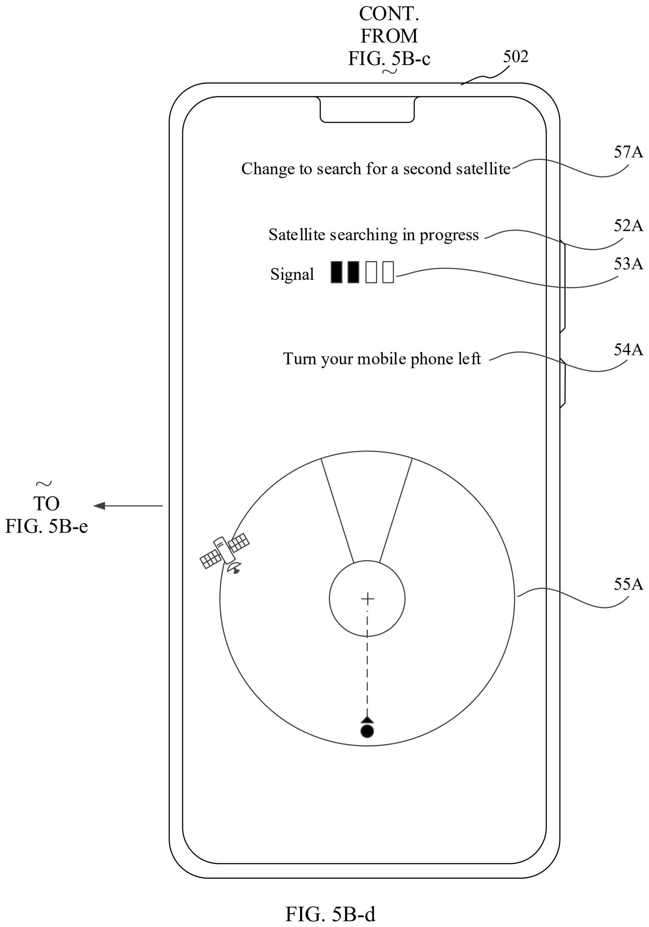

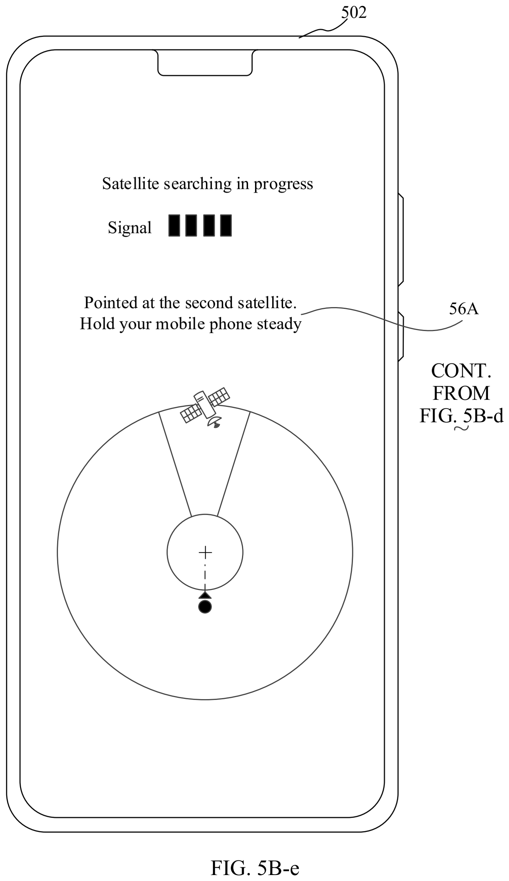

For example, after the user points the terminal device at the first satellite, if the terminal device fails to find the first satellite by using the second search strategy, the terminal device may display a satellite searching interface 502, and all content on the satellite searching interface 502 may be used as the second prompt information. Refer to FIG. 5B-d. The satellite searching interface 502 may include: an identifier 52A of satellite searching in progress, an identifier 53A of signal strength of the second satellite, information 54A for guiding the user to adjust a posture of the terminal device, and a diagram 55A of a location of the terminal device relative to the second satellite. In an example, to enable the user to intuitively see that the terminal device changes to search for the second satellite, the satellite searching interface 502 may further display information 57A that indicates that the terminal device changes to search for the second satellite. The user may adjust the posture of the terminal device based on the information 54A for guiding the user to adjust the posture of the terminal device, so that the terminal device is pointed at the second satellite. It should be understood that FIG. 5B-a to FIG. 5B-c are respectively the same as a to FIG. 5A-c. For details, refer to the related descriptions in FIG. 5A-a to FIG. 5A-d.

When the user adjusts the posture of the terminal device so that the terminal device is pointed at the second satellite, the satellite searching interface 502 may display information 56A indicating that pointing succeeds, as shown in FIG. 5B-e.

In an example, before outputting the second prompt information, the terminal device may further output prompt information, to query whether the user agrees to change the satellite searched by the terminal device. If the user agrees, the terminal device may output the second prompt information, to guide the user to point the terminal device at the second satellite.

S902: When the terminal device is pointed at the second satellite, search for the second satellite by using the first search strategy.

S903: If the terminal device finds the second satellite, track the second satellite.

S904: If the terminal device fails to find the second satellite, search for the second satellite by using the second search strategy.

S905: If the terminal device finds the second satellite, track the second satellite.

For S902 to S905, refer to the descriptions in S402 to S405.

It should be noted that in this embodiment, if the terminal device may obtain an orbital change period of the second satellite in advance, S901 to S905 may be replaced with S901A to S903A, as shown in FIG. 9B.

S901A: If the terminal device fails to find the first satellite, output second prompt information, where the second prompt information is used to guide the user to point the terminal device at the second satellite.

For S901A, refer to the descriptions in S901.

S902A: When the terminal device is pointed at the second satellite, if it is determined, based on the orbital change period of the second satellite, that the second satellite is in an orbital change process, search for the second satellite by using the second search strategy.

S903A: If the terminal device finds the second satellite, track the second satellite.

For S902A and S903A, refer to the descriptions in S702 and S703.

In this embodiment, if the terminal device still fails to find the second satellite, the terminal device may continue to search for a third satellite that covers the terminal device, or the terminal device attempts to search for the second satellite again. For details, refer to the related descriptions in Manner 1 and Manner 2.

### Manner 2:

If the terminal device fails to find the first satellite, the terminal device may return to perform S402 or S404.

In Manner 2, if the terminal device fails to find the first satellite by using the second search strategy, the terminal device may attempt to search for the first satellite again. The terminal device may continue to search for the first satellite in a manner that uses "first search strategy + second search strategy", or in a manner that uses only the second search strategy. In FIG. 9C, an example in which the terminal device returns to perform S404 is used.

In an embodiment, a quantity of times that the terminal device attempts to search for the first satellite may be preset. The terminal device stops searching for the first satellite when the quantity of search times reaches a preset quantity of times. Alternatively, the terminal device stops searching for the first satellite when a duration for searching the first satellite reaches a preset duration. In this embodiment, after stopping searching for the first satellite, the terminal device may perform S901 to S905 or S901A to S903A.

In this embodiment of this application, if the terminal device fails to find the first satellite by using the second search strategy, the terminal device may change to search for the second satellite, or continue to attempt to search for the first satellite. This can ensure that the terminal device can find one satellite, thereby ensuring satellite communication of the terminal device.

Table 1 separately shows a process in which the terminal device searches for a satellite provided in the conventional technology, and processes in which the terminal device searches for a satellite in FIG. 4 and FIG. 7. In Table 1, an example in which the first satellite is a satellite 1 and the second satellite is a satellite 2 is used for description.

**Table 1**

| | Before the terminal device is pointed at the satellite 1 | After the terminal device is pointed at the satellite 1 | After the terminal device is guided to point at the satellite 2 |
|---|---|---|---|
| Embodiment shown in FIG. 4 | Search for the satellite 1 by using the first search strategy cyclically | 1. Search for the satellite 1 by using the first search strategy (which takes 1.5s) | 1. Search for the satellite 2 by using the first search strategy (which takes 1.5s) |
| | | 2. Search for the satellite 1 by using the second search strategy (which takes 23s) | 2. Search for the satellite 2 by using the second search strategy (which takes 23s) |
| Embodiment shown in | Search for the satellite 1 by | Search for the satellite 2 by using the second search | Search for the satellite 2 by using the second search |
| FIG. 7 | using the first search strategy cyclically | strategy (which takes 23s) | strategy (which takes 23s) |
| Conventional technology | Search for the satellite 1 by using the first search strategy cyclically | 1. Search for the satellite 1 by using the first search strategy, but the satellite 1 cannot be found | - |

In this embodiment of this application, before the terminal device is pointed at the satellite 1 (the first satellite), the terminal device may search for the satellite by using the first search strategy cyclically. After the terminal device is pointed at the satellite 1 (the first satellite), the terminal device may search for the first satellite in a manner that uses "the first search strategy + the second search strategy", or in a manner that uses the second search strategy. A comparative analysis with Table 1 shows that:

Compared with the conventional technology, in embodiments shown in FIG. 4 and FIG. 7, when the satellite 1 is in an orbital change process, the terminal device can still find the satellite 1, so that satellite communication between the terminal device and the satellite 1 can be ensured. Compared with the embodiment shown in FIG. 4, in the embodiment shown in FIG. 7, when the satellite 1 is in the orbital change process, the terminal device may search for the satellite 1 based on an orbital change period of the satellite 1 by using the second search strategy. This can improve search efficiency and reduce a waiting duration of the user.

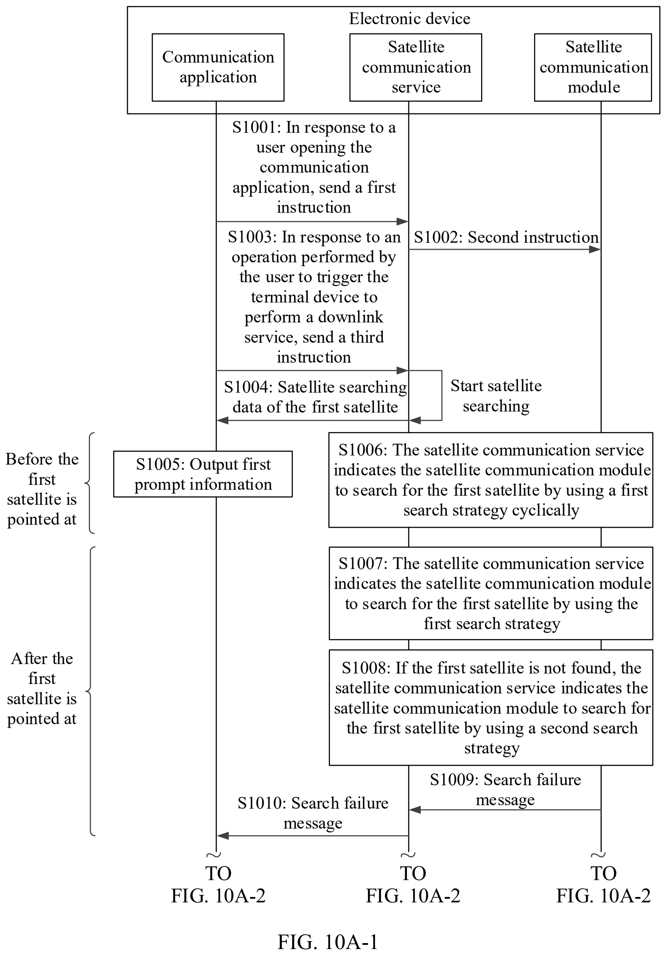

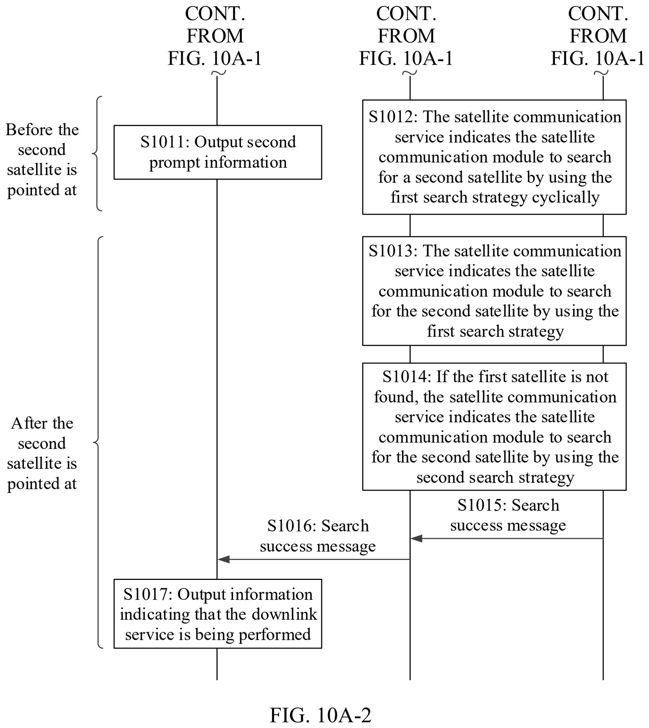

FIG. 10A-1 and FIG. 10A-2 are a schematic flowchart of another embodiment of a communication method according to an embodiment of this application. Refer toFIG. 10A-1 and FIG. 10A-2. In an embodiment, a terminal device may include a communication application, a satellite communication service (service), and a satellite communication module. In an example, the satellite communication module may be a satellite communication chip.

Refer to FIG. 10A-1 and FIG. 10A-2. The communication method provided in embodiments of this application may include the following steps.

S1001: In response to a user opening a communication application, the communication application sends a first instruction to the satellite communication service.

The first instruction is used to enable the satellite communication service, and enabling the satellite communication service may be understood as indicating the satellite communication service to start working.

S1002: The satellite communication service sends a second instruction to the satellite communication module.

The second instruction is used to enable the satellite communication module, and enabling the satellite communication module may be understood as indicating the satellite communication module to start working.

S1003: In response to an operation performed by the user to trigger the terminal device to perform the downlink service, the communication application sends a third instruction to the satellite communication service.

The third instruction is used to trigger the satellite communication service to start satellite searching, and satellite searching may be understood as follows: The terminal device is pointed at a satellite and searches for the satellite.

S1004: The satellite communication service starts satellite searching, and sends satellite searching data of the first satellite to the communication application.

In response to the third instruction, the satellite communication service may report the satellite searching data of the first satellite to the communication application. The satellite searching data of the first satellite is used to guide the terminal device to point at the first satellite.

In an embodiment, the satellite searching data of the first satellite may include but is not limited to posture data of the terminal device and an azimuth of the first satellite relative to the terminal device. The posture data of the terminal device may include a pitch angle of the terminal device.

S1005: The communication application outputs first prompt information.

S1006: The satellite communication service indicates the satellite communication module to search for the first satellite by using a first search strategy cyclically.

It should be understood that S1005 and S1006 may be simultaneously performed, and there is no order of precedence between the two.

S1007: When the terminal device is pointed at the first satellite, the satellite communication service indicates the satellite communication module to search for the first satellite by using the first search strategy.

S1008: If the first satellite is not found, the satellite communication service indicates the satellite communication module to search for the first satellite by using a second search strategy.

S1009: If the first satellite is still not found, the satellite communication module sends a search failure message to the satellite communication service.

S1010: The satellite communication service sends the search failure message to the communication application.

S1011: The communication application outputs second prompt information.

S1012: The satellite communication service indicates the satellite communication module to search for a second satellite by using the first search strategy cyclically.

It should be understood that S1011 and S1012 may be simultaneously performed, and there is no order of precedence between the two.

S1013: When the terminal device is pointed at the second satellite, the satellite communication service indicates the satellite communication module to search for the second satellite by using the first search strategy.

S1014: If the second satellite is not found, the satellite communication service indicates the satellite communication module to search for the second satellite by using the second search strategy.

S1015: If the second satellite is found, the satellite communication module sends a search success message to the satellite communication service.

S1016: The satellite communication service sends the search success message to the communication application.

S1017: The communication application outputs information indicating that the downlink service is being performed.

For example, refer to FIG. 5A-a to FIG. 5A-d. The information indicating that the downlink service is being executed that is output by the communication application may be, for example, text prompt information of "Information is being received from the satellite" that is displayed on an interface of the terminal device.

In an embodiment, some steps shown in FIG. 10A-1 and FIG. 10A-2 are optional steps, and some steps may be combined with each other.

It should be understood that, in FIG. 10A-1 and FIG. 10A-2, an example in which the terminal device searches for the first satellite and the second satellite by using "the first search strategy + the second search strategy", and the terminal device cannot find the first satellite but finds the second satellite is used for description. The communication method provided in this embodiment of this application has a same principle and technical effects as those in the foregoing embodiments. For details, refer to the descriptions in the foregoing embodiments.

In an embodiment, refer to FIG. 10B. The communication method provided in embodiments of this application may further include the following steps.

S1001A: In response to an operation of triggering the terminal device to perform the downlink service, when the terminal device is pointed at the first satellite, if the first satellite is in an orbital change process, search for the first satellite by using the second search strategy.

The terminal device is within coverage of the first satellite. In addition, for the operation of triggering the terminal device to perform the downlink service, refer to the descriptions in S401.

In an embodiment, when the terminal device detects the operation of triggering the terminal device to perform the downlink service, the terminal device is not pointed at the first satellite. In this embodiment, the terminal device may output the first prompt information, to guide the user to adjust a posture of the terminal device, so that the terminal device is pointed at the first satellite.

In an embodiment, when the terminal device detects the operation of triggering the terminal device to perform the downlink service, the terminal device has been pointed at the first satellite. In this case, the terminal device may not output the first prompt information, but instead, display information indicating that the terminal device has been pointed at the first satellite, for example, display information 56 indicating that pointing succeeds in FIG. 5A-c.

When the terminal device responds to the operation of triggering the terminal device to perform the downlink service, and the terminal device is pointed at the first satellite, if the first satellite is in the orbital change process, the terminal device may search for the first satellite by using the second search strategy. The second search strategy is searching in a preset time domain range based on a preset search frequency range. For details, refer to the descriptions in S404.

In an embodiment, in response to the operation of triggering the terminal device to perform the downlink service, when the terminal device is pointed at the first satellite, the terminal device may search for the first satellite by using the first search strategy. If the terminal device can find the first satellite, the terminal device may determine that the first satellite is not in the orbital change process. If the terminal device fails to find the first satellite, the terminal device may determine that the first satellite is in the orbital change process.

In an embodiment, in response to the operation of triggering the terminal device to perform the downlink service, when the terminal device is pointed at the first satellite, if the terminal device has obtained an orbital change period of the first satellite in advance, the terminal device may determine, based on the orbital change period of the first satellite, whether the terminal device is in the orbital change process, to save a search time of the terminal device. If a current moment is within the orbital change period of the first satellite, it is determined that the first satellite is in the orbital change process. If a current moment is not within the orbital change period of the first satellite, it is determined that the first satellite is not in the orbital change process. The current moment may be understood as a moment at which the terminal device is pointed at the first satellite.

S1002A: If the first satellite is found, track the first satellite.

The communication method provided in this embodiment of this application has same technical effects as those in the foregoing embodiments. For details, refer to the related descriptions in the foregoing embodiments.

It should be noted that user information (including but not limited to user equipment information, personal information of the user, and the like) and data (including but not limited to data used for analysis, stored data, displayed data, and the like) in this application are information and data that are authorized by the user or fully authorized by all parties. In addition, collection, use, and processing of related data need to comply with related laws, regulations, and standards of related countries and regions. A corresponding operation entry is provided for the user to choose to authorize or reject.

In an embodiment, an embodiment of this application further provides an electronic device. The electronic device may be the terminal device in the foregoing embodiments. Refer to FIG. 11. The electronic device may include a processor 1101 (for example, a CPU) and a memory 1102. The memory 1102 may include a high-speed random-access memory (random-access memory, RAM), and may further include a non-volatile memory (non-volatile memory, NVM), for example, at least one magnetic disk memory. The memory 1102 may store various instructions, to complete various processing functions and implement the steps of the methods in this application.

Optionally, the electronic device in this application may further include a power supply 1103, a communication bus 1104, and a communication port 1105. The communication port 1105 is configured to implement a connection and communication between the electronic device and another peripheral device. In this embodiment of this application, the memory 1102 is configured to store computer-executable program code. The program code includes instructions. When the processor 1101 executes the instructions, the instructions enable the processor 1101 of the electronic device to perform the actions in the foregoing method embodiments. Implementation principles and technical effects thereof are similar to those in the foregoing method embodiments. Details are not described herein again.

Optionally, the electronic device may further include a display 1106, and the display 1106 is configured to display an interface of the electronic device.

It should be noted that the modules or components in the foregoing embodiments may be configured as one or more integrated circuits for implementing the foregoing methods, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form of invoking program code by a processing element, the processing element may be a general-purpose processor, for example, a central processing unit (central processing unit, CPU) or another processor that can invoke the program code, for example, a controller. For another example, the modules may be integrated and implemented in a form of system-on-a-chip (system-on-a-chip, SOC).

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that, in the descriptions of this application, terms such as "first" and "second" are merely used for distinguishing and description, cannot be understood as an indication or implication of relative importance, and cannot be understood as an indication or implication of a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A communication method, applied to a terminal device, wherein the method comprises:
in response to an operation of triggering the terminal device to perform a downlink service, when the terminal device is pointed at a first satellite, and if the first satellite is in an orbital change process, searching for the first satellite by using a second search strategy, wherein the second search strategy is searching within a preset time domain range based on a preset search frequency range, and the terminal device is within coverage of the first satellite; and
if the first satellite is found, tracking the first satellite.

2. The method according to claim 1, wherein the method further comprises:
in response to the operation of triggering the terminal device to perform the downlink service, outputting first prompt information, wherein the first prompt information is used to guide a user to point the terminal device at the first satellite.

3. The method according to claim 1 or 2, wherein the method further comprises:
when the terminal device is pointed at the first satellite, searching for the first satellite by using a first search strategy, wherein the first search strategy is searching for the first satellite based on an ephemeris of the first satellite; and
if the first satellite is not found by using the first search strategy, determining that the first satellite is in the orbital change process.

4. The method according to claim 3, wherein the method further comprises:
if the first satellite is found by using the first search strategy, tracking the first satellite.

5. The method according to claim 1 or 2, wherein the method further comprises:
if a current moment is within an orbital change period of the first satellite, determining that the first satellite is in the orbital change process.

6. The method according to claim 5, wherein the method further comprises:
if the current moment is not within the orbital change period of the first satellite, searching for the first satellite by using a first search strategy, wherein the first search strategy is searching for the first satellite based on an ephemeris of the first satellite.

7. The method according to claim 5 or 6, wherein the method further comprises:
receiving the orbital change period of the first satellite from a ground station.

8. The method according to any one of claims 1 to 7, wherein the method further comprises:
if the first satellite is not found by using the second search strategy, outputting second prompt information, wherein the second prompt information is used to guide the user to point the terminal device at a second satellite, and the terminal device is within coverage of the second satellite;
when the terminal device is pointed at the second satellite, if the second satellite is in an orbital change process, searching for the second satellite by using the second search strategy; and
if the second satellite is found, tracking the second satellite.

9. The method according to claim 8, wherein the method further comprises:
if the second satellite is not in the orbital change process, searching for the second satellite by using the first search strategy, wherein the first search strategy is searching for the second satellite based on an ephemeris of the second satellite.

10. The method according to any one of claims 1 to 7, wherein the method further comprises:
if the first satellite is not found by using the second search strategy, continuing to search for the first satellite by using the second search strategy.

11. The method according to claim 10, wherein the method further comprises:
stopping searching for the first satellite when a quantity of times of searching for the first satellite by using the second search strategy reaches a preset quantity of times, or a duration of searching for the first satellite by using the second search strategy reaches a preset duration, and the first satellite is still not found.

12. The method according to any one of claims 1 to 11, after tracking the first satellite, the method further comprises:
receiving downlink information from the first satellite.

13. An electronic device, comprising a processor and a memory, wherein
the memory stores computer instructions; and
the processor executes the computer instructions stored in the memory, to enable the processor to perform the method according to any one of claims 1 to 12.

14. A computer-readable storage medium, wherein the computer-readable storage medium stores a computer program or instructions, and when the computer program or the instructions are run, the method according to any one of claims 1 to 12 is implemented.
